# EUROPEAN PATENT APPLICATION

(11) **EP 1 174 826 A2**
(43) Date of publication of application: **23.01.2002**
(21) Application number: 01117189.9
(22) Date of filing: 16.07.2001
(51) Int. Cl.: G06T 9/00

(54) **A method and apparatus for reducing video data**

(30) Priority: 17.07.2000 US 617778
(71) Applicant: Dynapel Systems, Inc., New York, New York 10068-1495 (US)
(72) Inventor: Edelson, Steven D., Wayland, Massachusetts 01778-2101 (US)
(74) Representative: DIEHL GLAESER HILTL & PARTNER

(57) **Abstract**

In a system for reducing the data in a video, the frames of the video are scored by how well the frames can be recreated from the remaining frames after frames in the video have been eliminated. Each frame is recreated by an interpolation mending technique from the adjacent frames in the reduced video and the mended frame is compared with the original frame to determine a score for the frame. Following the scoring process wherein each frame is scored, only those frames which can be most accurately recreated by the mending process are eliminated. The reduced video is then transmitted and the mending process is then used to recreate the eliminated frames at the receiver to restore the video to a close approximation of its original form.

## Description

This invention relates to motion picture video data reduction and more particularly to a video data reduction system of a type which eliminates video frames, which are then recreated from the reduced version of the video when the motion picture video is expanded back to its original form or an approximation thereof.

### Background of the Invention

There are several compression techniques currently used for images, cartoon-like animation and video. Images are the easiest to compress and video is the most difficult. Animation yields to techniques in which the objects and their motion are described in transmitted data and the receiving computer animates the scene. Commercial products such as Macromedia Shockwave take advantage of these techniques to deliver animated drawings over the Internet. Video cannot benefit from this technique. In video, the images are captured without knowledge of the content. It is an unsolved problem for a machine to recognize the objects within a captured video and then manipulate them.

To reduce the size of video files for Internet, individual pictures ("frames") are removed. This technique is very effective in data reduction, but the removal of frames results in visible gaps in the motion. The illusion of motion disappears and the video motion perceived usually becomes jerky and less pleasant to the viewer.

There are new techniques being developed that mend reduced videos by filling in video gaps with recreated frames. The most sophisticated, such as that disclosed in copending application Serial No. 09/459,988, filed December 19, 1998, by Steven D. Edelson and Klaus Diepold, use motion estimation to properly estimate the recreated frames to be inserted and do a superior job. Using a tool like that disclosed in application Serial No. 09/459,988 can help restore the damage done by elimination of frames.

Because these mending techniques are estimation techniques, the results vary depending on the content of the source videos. Within a given video, certain frames can be eliminated and restored with little error while others, when removed, do not lend themselves to effective restoration.

If a system were to know that the receiver had an effective video mending capability, it could make intelligent decisions to eliminate the frames which do the least damage (easiest to mend). Such a system could achieve maximum data reduction with the highest quality reproduction of the motion picture.

### Summary of the Invention

The system of the present invention examines an input video and evaluates which video frames can be eliminated with the best result. To examine the video, a copy of the mending program is used to generate actual mending results of each frame and compares this result to the original. Each frame is scored on the results of the comparison and the frames in the original video, which correspond to mended frames which most closely duplicate the original frames are removed. This process can be repeated until the video is reduced to the target size.

### Brief Description of the Drawings

Fig. 1 is a block diagram grammatically illustrating the system of the invention.

Fig. 2 is a flow chart illustrating the method of video data reduction employed in the system of the present invention.

Fig 3 is a flow chart illustrating in more detail how motion picture frames are scored in the process illustrated in Fig. 2.

Fig. 4 is a flow chart further illustrating motion picture frame scoring.

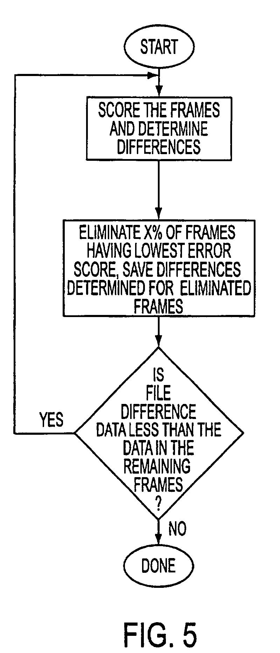

Fig. 5 is a flow chart of an alternative way to use scoring to reduce the size of the transmitted video file.

### Description of a Preferred Embodiment of the Invention

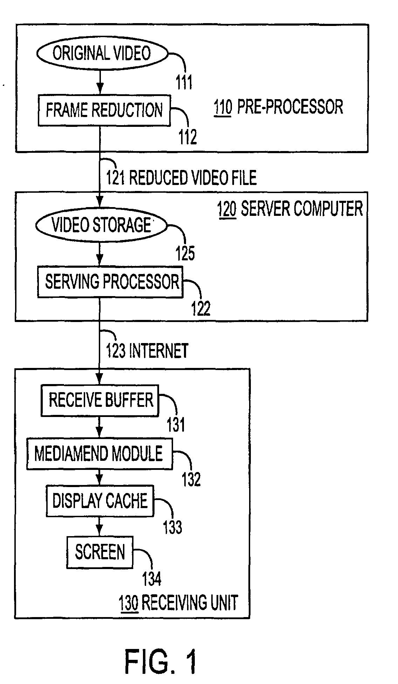

As shown in Fig. 1, the video passes from the preprocessing computer 110 to the server computer 120 and then over the Internet to the receiving unit 130. The receiving unit may be a personal computer, but could also be another device such as an Internet-cable-TV box (sometimes called "set-top box"), a web phone or other Internet appliance. Although this process may be spread on more computers or consolidated onto fewer, the preferred embodiment employs three computers as shown in Fig. 1.

In the pre-processor, the original video 111 is passed through the frame reduction process 112. Although it does not interfere with the invention, it should be noted that other processing is also performed in the preprocessor, including color adjustment, frame size adjustment and compression using any of a variety of compressors such as MPEG. The Output is a reduced video file 121 that is stored in video storage 125 on the video server 120. The video file 121 is reduced by the elimination of frames from the original video. A serving processor 122 in the server computer 120 is connected to the Internet 123 (or other distribution means) to serve the reduced videos (as well as un-reduced videos) to client machines on the Internet.

The video, when received in the receiving unit 130, is stored in a receive buffer 131. In the proper schedule sequence, the video is moved from the receive buffer 131 to the display cache 133. from which the video can displayed on screen 134. On the way to the display cache, the video is passed through a mending module 132 which recreates and inserts the missing frames in the reduced video to produce a mended version of the original video. This mending module generates the missing frames by interpolation such as by the method described in U.S. application Serial No. 09/459,988, which is hereby incorporated by reference. Alternatively, another equivalent process could be used. The mending module 132 also has the ability to pass through the video without changing the video, if so requested. This selection of the mode of operation to pass through the video without change may be made for the whole video or on a scene-by-scene or even on frame-by-frame basis.

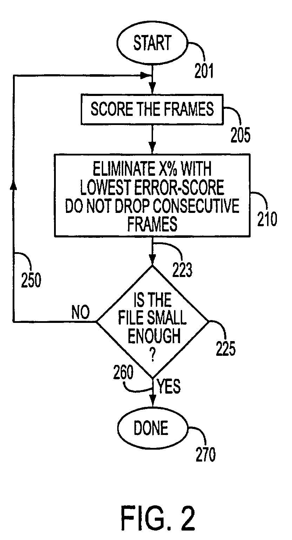

The flow chart of Fig. 2 shows the operation of the frame reduction module 112. The operation starts in step 201 as the video is passed to the score-the-frames routine 205. In the preferred embodiment, each frame is scored individually by determining the error caused by eliminating the frame. Alternatively, the effects of deleting multiple adjacent frames could be scored preliminary to eliminating multiple frames. After the frames are given scores, a percentage of the frames are removed based on the given scores in routine 210. Since the scores were given without consideration of elimination of multiple sequential frames, routine 210 avoids eliminating frames that are adjacent to other frames eliminated in this pass through routine 210. The percentage of frames to be removed in one pass through routine 210 is adjustable, but set at 10% in the preferred embodiment. After removal of frames on a first cycle through routines 205 and 210, the reduced video 223 is examined in step 225 to see if it is small enough for the target deployment. If it is not small enough, the smaller video is passed back through the routines 205 and 210 again to reduce it again. The cycling through routine 205 and 210 is repeated until the number of frames is reduced to the desired amount, at which point the process is complete.

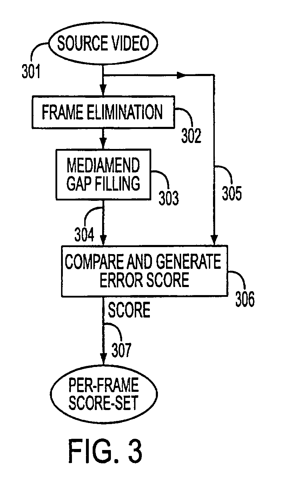

Fig. 3 shows the operation of the score-the-frame routine 205. The source video 301 is passed to a frame elimination step 302 which removes single frames. The video with the frame removed is passed to a mending routine 303 to produce a mended version 304 of the removed frame. This mended version is passed, along with the original frames 305, to a comparison module 306. This comparison module evaluates the mended frames against the original frames and gives them an error score indicating how different the mended frame is from the original. The scoring process starts by eliminating a selected frame between the first and last frames of the video, such as, for example, the second frame. Then the system mends the video by recreating the eliminated frame using a selected mending technique, such as interpolation from dense motion field vectors. The recreated frame, called the mended frame, is then compared pixel by pixel, or other method, with the original eliminated frame to provide the error score for the corresponding original frame indicating how much the mended frame differs from the original frame. This scoring process is repeated for each intermediate frame in the motion picture from the second frame to the penultimate frame. The scoring can be done using any number of heuristics. In the preferred embodiment, a least-squared difference (|A²- B²|)^{½} is computed on each of the color components (RGB or YUV) for each pixel, A being a color component (RGB or YUV) of a pixel in the original frame and B being the corresponding color component of the corresponding pixel in the mended frame. The total is then stored as the error score for each frame. The smaller the score, the better the match and the higher the priority of removing this frame.

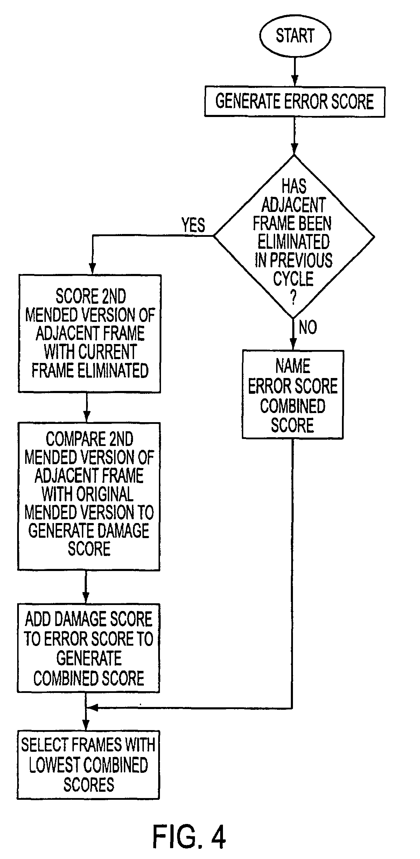

To achieve the result of eliminating frames without eliminating adjacent frames in the routine 210, the frame with the lowest error score is selected and is eliminated first. The process of routine 210 then finds the frame which has the next lowest error score and which is not next to a frame which has been previously eliminated in this cycle through the routine 210. This process continues in this manner until the selected percentage of the frames has been eliminated. On each cycle through the routine 210, after the first cycle, the individual frames which are not adjacent to a frame which has been eliminated in a previous cycle through the routine 210 are scored in the same manner as described above for the first cycle through the routine 210. If a given frame is adjacent to a frame which has been eliminated in a previous cycle through routine 210, the given frame is given a combination score, which is its error score plus a damage score based on how much damage the elimination of the given frame will do to the mended frame which will replace the adjacent, previously eliminated frame. The amount of damage to the adjacent mended frame is scored by comparing two versions of the adjacent mended frame, one version being determined by interpolation with the original given frame present and the other version being determined by interpolation with the given frame eliminated. In this latter case there will be at least two adjacent frames eliminated and the interpolation has to recreate the missing frame from the closest frames remaining in the original video. The difference between the two versions of the mended adjacent frame is the damage score assigned to the given frame. The combination scores for the frames which are not adjacent to a frame eliminated in a previous cycle through the routine 210, are the same as the error scores for these frames. The combination scores are then compared to select and eliminate the frames which have the lowest combination scores and which are not adjacent to one another in the same manner that the frames were selected and eliminated in the first cycle through the routine 210 until the selected percentage of the frames have been eliminated. The above-described process of generating the combined scores is illustrated in the flow chart of Figure 4.
In the system as described above, only those frames, which can be effectively replaced by the mending process, are eliminated. Thus, the system is substantially more effective in reproducing a quality recreated version of the original video which has been reduced in data by frame elimination. A variation of the scoring process saves the differences between the mended frames and the original frames for future usage. The differences between each mended version of a frame and the corresponding original frame are determined at the time the frames are scored in routine 205 as shown in Fig. 2. Then when the frames are eliminated in routine 210, the differences between the eliminated frames and the original frames are saved and are included in the video file 21 that is stored in video storage 125. The difference information for the eliminated frames can then be optionally transmitted to the receiver along with the frames which are not eliminated. When the receiver performs the mending on the removed frames, it can then add the received difference information to mended versions of the frames to provide final restored frames with increased quality. The Difference information may be sent whole, or may be sent selectively when the pre-processor 110 determines that the difference between the mended version and the original is noticeable. The difference information may also be compressed before transmission using any number of common compression techniques. Preferably, the compression would be one of those that selectively uses bandwidth where the human eye is most sensitive, such as the Discrete Cosine Transform coding used by JPEG.

Another usage of this technique is an alternative to reducing the video until it reaches a preselected size. In this alternative technique, the pre-processor 110 continues to eliminate the frames as long as the difference data to be sent to the receiver is less than the data required to send the remaining frames. Since the difference data can restore the original frame to a selected specified level, this process can be run until there are no more data savings to be gained from further eliminating frames. The above description is of a preferred embodiment of the invention and modifications may be made thereto without departing from the spirit and scope of the invention, which is defined in the appended claims.

## Claims

1. Method of reducing the data in a video comprising testing frames in an original video to select frames in the original video which can be most accurately recreated from a reduced video in which the selected frames have been eliminated and producing a reduced video by eliminating those frames from the original video which can be most accurately recreated from the remaining video frames of said reduced video.

2. A method that is recited in claim 1 further comprising recreating the frames which have been eliminated from the remaining video frames and displaying the video with the recreated frames.

3. A method as recited in claim 1 wherein the eliminated frames are recreated from the reduced video by interpolation between adjacent frames of the reduced video.

4. A method as recited in claim 1 wherein the frames of the original video are tested to determine how accurately the frames can be recreated by recreating the frames from a reduced video and then comparing the recreated frames with the corresponding frames in the original video.

5. A method as recited in claim 1 wherein, in at least one cycle of the routine of eliminating frames, the only frames eliminated are those which are not adjacent to other frames eliminated in said cycle.

6. Method as recited in claim 1 wherein the routine of eliminating frames eliminates frames in cycles, wherein a predetermined percentage of the frames are eliminated in each cycle, and wherein in subsequent cycles after the first cycle each frame is provided with a combination score corresponding to how much a recreated frame differs from the corresponding original frame and how much adjacent recreated frames are damaged by the elimination of such frame, said routine eliminating during each cycle subsequent to the first cycle the frames having the lowest combination score.

7. A system for providing video over the Internet comprising a source of original video, first data processing equipment programmed to generate from said original video a reduced video in which the amount of data is reduced by eliminating from said original video frames which can most accurately be recreated from the remaining frames of said reduced video, a receiving unit, said first data processing equipment being programmed to transmit said reduced video over a network to said receiving unit, said receiving unit including second data processing equipment programmed to recreate from said reduced video mended frames corresponding to the frames eliminated from said original video by said first data processing equipment.

8. A system as recited in claim 7 wherein said receiving unit has a buffer memory to receive said reduced video, a display cache to store said reduced video with said recreated frames, and a display device to display the video stored in said display cache.

9. A system for providing advertising video on the Internet as recited in claim 7 wherein said second data processing equipment recreates said mended frames by interpolating between adjacent frames in said reduced video.

10. A system as recited in claim 7 wherein said first data processing equipment tests each frame of the original video to determine how accurately it can be recreated by recreating such frame and then comparing the recreated frame with the corresponding original frame.

11. A system as recited in claim 10 wherein said first data processing equipment saves the differences between the reproduced frames and the corresponding original frames which have been eliminated, said first data processing equipment transmitting said differences with said reduced video over said network to said receiving unit, said second data processing being programed to recreate from said reduced video and from said differences mended frames corresponding to the frames eliminated from said original video by said first data processing equipment.

12. A system as recited in claim 7 wherein said first data processing equipment in at least one cycle of the routine of eliminating frames, eliminates only those frames which are not adjacent to other frames eliminated in said cycle.

13. A system as recited in claim 7 wherein said first data processing equipment eliminates frames in cycles wherein a predetermined percentage of the frames are eliminated in each cycle and wherein in subsequent cycles after the first cycle each frame is provided with a combination score corresponding with how much a recreated frame differs from the corresponding original frame and how much adjacent recreated frames are damaged by the elimination of such frames, said first data processing equipment eliminating during each cycle subsequent to the first cycle, the frames having a lowest combination score.

14. A method of processing and displaying video comprising testing frames in an original video to select in the original video those frames which can be most accurately recreated from a reduced video in which the selected frames have been eliminated, producing an output reduced video by eliminating those frames from the original video which can be most accurately recreated from the remaining video frames of said output reduced video, said frames being tested by recreating each frame from the frames of a reduced video and comparing each recreated frame with the corresponding frame of said video original saving the differences between the recreated frames and the corresponding frames in the original video, recreating from the output reduced video and from said differences the frames which have been eliminated inserting the recreated frames in the reduced video to produce a mended version of the original video, and displaying the mended version of the original video.
